# EUROPÄISCHE PATENTANMELDUNG

(11) **EP 1 327 943 A2**
(43) Veröffentlichungstag der Anmeldung: **16.07.2003**
(21) Anmeldenummer: 02028528.4
(22) Anmeldetag: 19.12.2002
(51) Int. Cl.: G06F 17/30

(54) **System zur Anzeige von Informationen in Form eines Informationsmodells**

(30) Priorität: 14.01.2002 DE 10201064
(71) Anmelder: SIEMENS AKTIENGESELLSCHAFT, 80333 München (DE)
(72) Erfinder: Hoffmann, Marcus, 92272 Freudenberg (DE)

(57) **Zusammenfassung**

Die Erfindung betrifft ein System zur Bereitstellung von Informationen in Form eines Informationsmodells (1), welches die Navigation in komplexen Informationssystemen vereinfacht. Das Informationsmodell des vorgeschlagenen Systems weist flächige erste Informationseinheiten (2...5) und linienförmige zweite Informationseinheiten (10...13) zur Verknüpfung der ersten Informationseinheiten (2...5) auf. Das System weist mindestens ein Anzeigemittel (20) zur Darstellung von Teilen (21, 22) des Informationsmodells (1) und Navigationsmittel (23, 24) zur Änderung einer Informationsdichte der Darstellung der Teile (21, 22) des Informationsmodells (1) auf.

## Beschreibung

System zur Bereitstellung von Informationen in Form eines Informationsmodells

Die Erfindung betrifft ein System zur Bereitstellung von Informationen in Form eines Informationsmodells, insbesondere zur Verwendung in der Automatisierungstechnik.

Ein solches System kommt beispielsweise innerhalb eines Vertriebssystems für Komponenten der Automatisierungstechnik zum Einsatz. In einem solchen Vertriebssystem werden üblicherweise Informationen über die Produkte einem potentiellen Käufer präsentiert. Häufig liegen zwar vielfältige Informationen unterschiedlichster Art vor, diese sind dem Kunden - z. B. in einem im Internet verfügbaren komplexen Informationssystem - jedoch nur mittels Nutzung von Suchroutinen oder durch die mühsame Verfolgung verzweigter Verweise zugänglich.

Der Erfindung liegt die Aufgabe zugrunde, die Navigation in komplexen Informationssystemen zu vereinfachen.

Diese Aufgabe wird gelöst durch ein System zur Bereitstellung von Informationen in Form eines Informationsmodells, wobei das Informationsmodell flächige erste Informationseinheiten und linienförmige zweite Informationseinheiten zur Verknüpfung der ersten Informationseinheiten aufweist, mit mindestens einem Anzeigemittel zur Darstellung von Teilen des Informationsmodells und mit Navigationsmitteln zur Änderung einer Informationsdichte der Darstellung der Teile des Informationsmodells.

Der Erfindung liegt die Erkenntnis zugrunde, dass ein Nutzer eines Informationssystems sowohl Übersichtlichkeit als auch die schnelle Auffindbarkeit und die Darstellung von Detailinformationen erwartet. Genau dies ermöglicht das erfindungsgemäße System durch die vorgeschlagene Art der Bereitstellung von Informationen in Form eines Informationsmodells. Innerhalb des Informationsmodells werden Informationen ähnlich einer Landkarte dargestellt, mit flächigen ersten Informationseinheiten entsprechend Ortschaften und linienförmigen zweiten Informationseinheiten entsprechend Straßen zur Verknüpfung der ersten Informationseinheiten. Die dadurch entstehende Informationslandschaft kann mit mindestens einem Anzeigemittel mit verschiedenen, wählbaren Informationsdichten (entsprechend dem Maßstab einer Straßenkarte) dargestellt werden. Ein Anwender kann so abhängig von seinen Vorkenntnissen mit den Navigationsmitteln eine geeignete Darstellung wählen. Damit wird eine Informationsüberflutung des Anwenders und ein Verlust der Übersichtlichkeit vermieden. Dem Anwender werden trotzdem die für ihn momentan nötigen Informationen zur Verfügung gestellt. Durch Änderung der Informationsdichte der Darstellung von Teilen des Informationsmodells kann der Anwender zu bestimmten von ihm gewünschten Informationen in die Tiefe gehen.

In einer vorteilhaften Ausgestaltung der Erfindung ist das Anzeigemittel zur gleichzeitigen Darstellung von Teilen des Informationsmodells mit unterschiedlicher Informationsdichte vorgesehen. Dadurch wird vermieden, dass der Anwender beim Durchsuchen komplexer Informationsräume die Orientierung verliert. Durch die Darstellung von Teilen des Informationsmodells mit geringer Informationsdichte erhält der Anwender einen Überblick über das Informationsmodell und kann Zusammenhänge zwischen den Informationseinheiten erkennen. Parallel zu dieser Überblicksdarstellung kann der Anwender mit den Navigationsmitteln andere Teile des Informationsmodells mit beliebig höherer Informationsdichte auf dem Anzeigemittel zur Darstellung bringen.

Gemäß einer weiteren vorteilhaften Ausgestaltung der Erfindung repräsentieren die ersten Informationseinheiten Produkte und/oder Produktfamilien und die zweiten Informationseinheiten Kommunikationswege und/oder Bussysteme. Dies ermöglicht insbesondere die Bereitstellung von Informationen aus der Automatisierungstechnik. Dabei wird die tatsächliche funktionale oder physikalische Verknüpfung zwischen Produkten/Produktfamilien und Kommunikationswegen/Bussystemen geschickt in eine entsprechende Strukturierung des Informationsmodells überführt. Ein fachkundiger Anwender findet sich intuitiv in einer derart gestalteten Informationslandschaft zurecht.

In einer weiteren vorteilhaften Ausgestaltung der Erfindung ist eine erste Ebene zur Darstellung der ersten und zweiten Informationseinheiten mit geringer Informationsdichte und hoher Übersichtlichkeit, eine zweite Ebene zur Darstellung der ersten und zweiten Informationseinheiten mit mittlerer Informationsdichte und mäßiger Übersichtlichkeit und eine dritte Ebene zur Darstellung der ersten und zweiten Informationseinheiten mit hoher Informationsdichte und geringer Übersichtlichkeit vorgesehen. Die Wahl von drei verschiedenen Darstellungsebenen mit unterschiedlicher Informationsdichte (Informationsdichte = Menge der Informationen pro Darstellungseinheit) bietet in vielen Anwendungsfällen einem Anwender den schnellstmöglichen Zugriff auf ihn interessierende Informationen. Der Anwender kann die erste Ebene zur schnellen Navigation innerhalb des gesamten Informationsmodells nutzen. Im nächsten Schritt kann der Anwender durch Verwendung der Navigationsmittel die Informationsdichte bei bestimmten ihn interessierenden Informationseinheiten erhöhen. Für weitere spezielle Informationen kann er schließlich auf der untersten, der dritten Ebene, erste und zweite Informationseinheiten mit hoher Informationsdichte zur Darstellung bringen. Erste Informationseinheiten, insbesondere die ersten Informationseinheiten der dritten Ebene, können vorteilhafterweise Dokumentationen zu Produkten enthalten. Bei Informationsmodellen zu sehr komplexen Systemen kann die Einfügung weiterer Ebenen unterschiedlicher Informationsdichte und Übersichtlichkeit zusätzlich zu den oben genannten drei Ebenen sinnvoll sein.

Nachfolgend wird die Erfindung anhand der in den Figuren dargestellten Ausführungsbeispiele näher beschrieben und erläutert.

Es zeigen:
- FIG 1: eine schematische Darstellung eines Systems zur Bereitstellung von Informationen in Form eines Informationsmodells,
- FIG 2: eine Darstellung von Informationseinheiten mit geringer Informationsdichte und hoher Übersichtlichkeit,
- FIG 3: eine Darstellung von Informationseinheiten mit mittlerer Informationsdichte und mäßiger Übersichtlichkeit und
- FIG 4: eine Darstellung von Informationseinheiten mit hoher Informationsdichte und geringer Übersichtlichkeit.

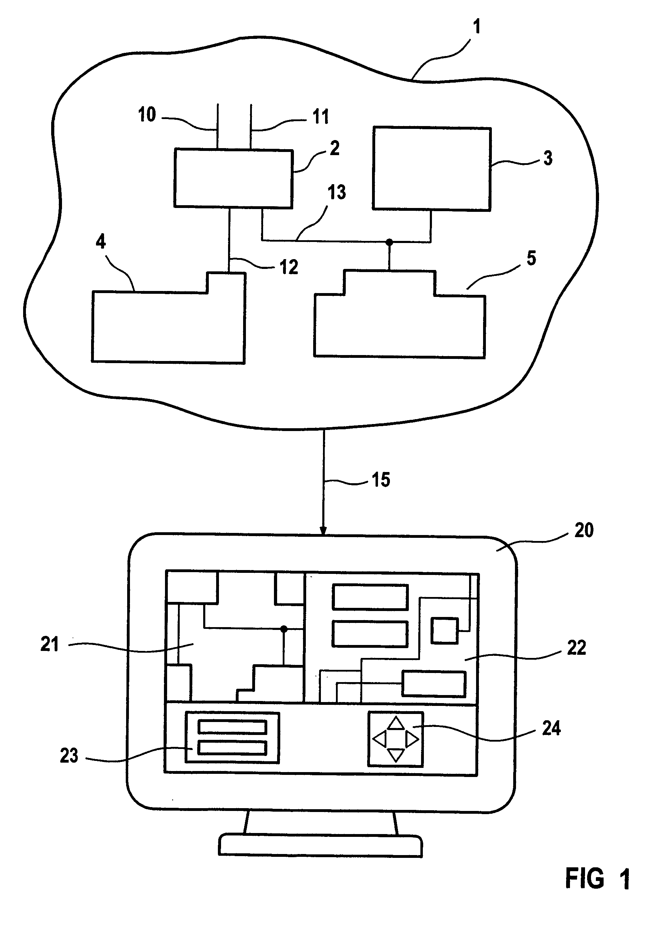

FIG 1 zeigt ein Ausführungsbeispiel eines Systems zur Bereitstellung von Informationen in Form eines Informationsmodells in einer schematischen Darstellung. Das System weist ein Informationsmodell 1 auf, welches flächige erste Informationseinheiten 2 bis 5 und linienförmige zweite Informationseinheiten 10 bis 13 enthält. Über eine Informationsübertragung 15 werden Informationen an ein Anzeigemittel 20 übertragen. Das Anzeigemittel 20 dient der Darstellung von Teilen 21, 22 des Informationsmodells 1 und weist Navigationsmittel 23, 24 auf.

Im Folgenden soll die der Erfindung zugrunde liegende Idee anhand FIG 1 erläutert werden. Das Informationsmodell 1 des Ausführungsbeispiels enthält Informationen über Produkte eines komplexen Automatisierungssystems. Die Navigation innerhalb der Informationen über das komplexe Systems wird dadurch vereinfacht, dass die Informationen ähnlich einer Landkarte dargestellt werden. Den Ortschaften einer solchen Landkarte entsprechen dabei flächige erste Informationseinheiten 2 bis 5, welche Informationen zu spezifischen Produkten und/oder Produktfamilien enthalten. Diese flächigen ersten Informationseinheiten 2 bis 5 werden verknüpft durch linienförmige zweite Informationseinheiten 10 bis 13, welche Kommunikationswege bzw. Bussysteme symbolisieren. Diese linienförmigen zweiten Informationseinheiten 10 bis 13 entsprechen Straßen, welche die Ortschaften einer Landkarte verbinden. Das Informationsmodell 1 ist in Speicherelementen eines PCs (PC = Personal Computer), eines Servers oder auf Datenträgern gespeichert. Mittels der Informationsübertragung 15 werden die Informationen des Informationsmodells 1 an Anzeigemittel 20 übertragen. In FIG 1 ist die Informationsübertragung 15 nur schematisch dargestellt und soll verschiedenste Wege der Informationsübertragung symbolisieren. Der Zugriff auf die Informationen des Informationsmodells 1 kann z. B. direkt softwaremäßig innerhalb eines Rechnersystems, über einen Bus innerhalb eines verteilten Rechnersystems, über eine Internetverbindung oder über eine drahtlose Verbindung erfolgen. Das Anzeigemittel 20, z. B. ein Bildschirm, weist eine Wiedergabefläche auf, welche in verschiedene Abschnitte unterteilt ist. Im Beispiel werden Teile 21, 22 des Informationsmodells 1 in zwei separaten Abschnitten in der oberen Hälfte der Wiedergabefläche des Anzeigemittels 20 dargestellt. Im unteren Teil der Wiedergabefläche befinden sich Navigationsmittel 23, 24, welche durch einen Anwender mittels einer Computer-Maus und/oder mittels Touch Screen-Funktionalität bedient werden können. Navigationsmittel zur Steuerung des Systems könnten sich auch außerhalb des Anzeigemittels 20 befinden, z. B. in Form einer Tastatur. Denkbar wäre auch eine Steuerung des Systems durch Erfassung und Umsetzung von Sprachbefehlen des Anwenders. Das im linken unteren Teil der Wiedergabefläche des Anzeigemittels 20 dargestellte Navigationsmittel 23 dient dem Anwender zur Auswahl einer Auflösung bzw. eines Maßstabs der Darstellung der Informationseinheiten des Informationsmodells 1 auf dem Anzeigemittel 20. Der Anwender kann mit dem Navigationsmittel 23 einen Zoomfaktor einstellen, welcher die Auflösung eines Teils 21, 22 des Informationsmodells 1 bestimmt. Im linken oberen Abschnitt der Anzeigefläche des Anzeigemittels 20 wird ein erster Teil 21 des Informationsmodells 1 in relativ großem Maßstab dargestellt. Diese Darstellung dient dem Anwender zur groben Orientierung innerhalb des Informationsmodells 1 und bietet daher bei einer relativ geringen Informationsdichte ein hohes Maß an Übersichtlichkeit. Durch direkte Anwahl innerhalb des dargestellten ersten Teils 21 des Informationsmodells 1 oder mit Hilfe des Navigationsmittels 23 kann ein Anwender im rechten oberen Teil der Wiedergabefläche des Anzeigemittels 20 einen zweiten Teil 22 des Informationsmodells 1 mit einem kleineren Maßstab auswählen und zur Anzeige bringen. In diesem zweiten Teil 22 des Informationsmodells 1 sind wesentlich mehr Details dargestellt, wobei die grundsätzliche Struktur des Informationsmodells 1-flächige erste Informationseinheiten verbunden durch linienförmige zweite Informationseinheiten - auch in dieser Darstellung mit geringerem Maßstab beibehalten wird. Der Anwender kann im zweiten Teil 22 des Informationsmodells 1 wiederum durch direkte Anwahl, durch Nutzung der Navigationsmittel 23 und/oder 24 oder durch weitere hier nicht dargestellte Bedienmittel navigieren. Durch die Anwahl von Details innerhalb des zweiten Teils 22 des Informationsmodells 1 werden immer detailliertere Informationen zur Anzeige gebracht. Dennoch behält der Anwender die Übersicht, da der erste Teil 21 des Informationsmodells 1 in einem anderen Abschnitt der Anzeigefläche parallel darstellbar ist, vorteilhafterweise in einem größeren Maßstab.

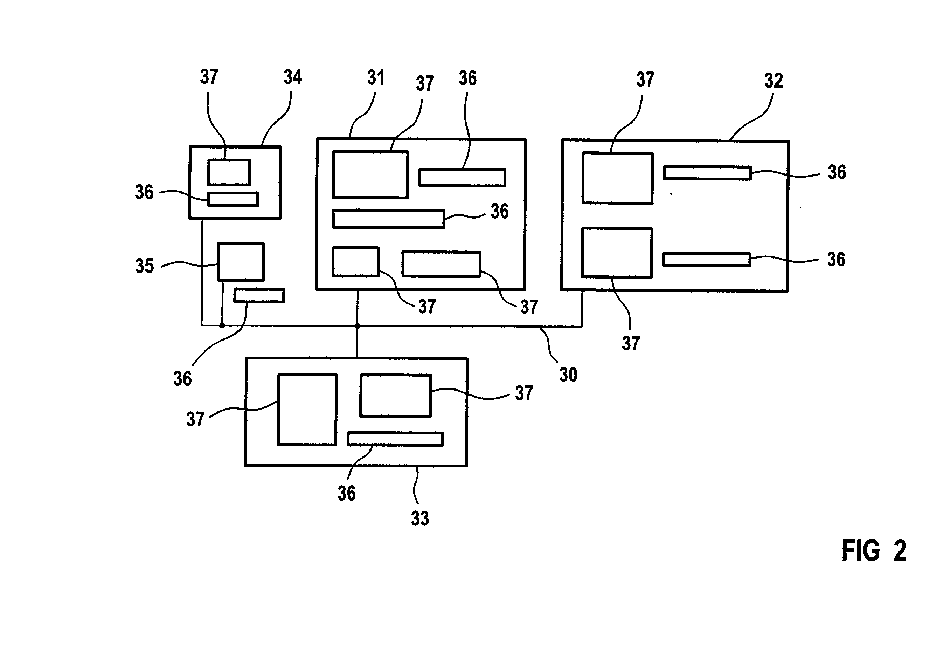

In FIG 2 bis FIG 4 sind verschiedene Darstellungen von Informationseinheiten des Informationsmodells 1 schematisch wiedergegeben. FIG 2 zeigt eine Darstellung von flächigen und linienförmigen Informationseinheiten mit geringer Informationsdichte und hoher Übersichtlichkeit. Diese Darstellung oder Teile dieser Darstellung können auf dem Anzeigemittel 20 wiedergegeben werden. Die flächigen ersten Informationseinheiten 2 bis 5 entsprechend FIG 1 sind in FIG 2 als konkrete Ausgestaltungen 31 bis 37 ausgebildet. Sie sind mit linienförmigen Informationseinheiten (als Ausgestaltung der linienförmigen zweiten Informationseinheiten 10 bis 13 entsprechend FIG 1), in diesem Fall einer Busverbindung 30, verbunden. Die flächigen Informationseinheiten symbolisieren Produktfamilien 31 bis 33, Produkte 34, 35 und 37 und erläuternde Texte 36. Die Darstellung von Informationseinheiten entsprechend FIG 2 ist ein Ausführungsbeispiel einer ersten Ebene zur Darstellung der ersten und zweiten Informationseinheiten mit geringer Informationsdichte und hoher Übersichtlichkeit. Ein Anwender kann in der ersten Ebene zur für ihn relevanten Produktgruppe/-familie navigieren. Mit Hilfe von Navigationsmitteln, z. B. Zoom-Buttons, kann er die Informationsdichte zu einer bestimmten Produktgruppe/-familie erhöhen. Die Darstellung in einer ersten Ebene gibt dem Anwender dabei eine sehr gute Übersicht über die im Informationsmodell 1 enthaltenen Informationen. Die Informationen sind dazu in Informationen zu Produktfamilien 31 bis 33 bzw. in Informationen zu Produkten 34, 35, 37 gegliedert, mit prägnanten erläuternden Texten 36 versehen und über eine skizzierte Busverbindung 30 in sinnvoller Weise miteinander verbunden. Die Übersichtlichkeit störende Informationen sind in dieser ersten Ebene nicht dargestellt.

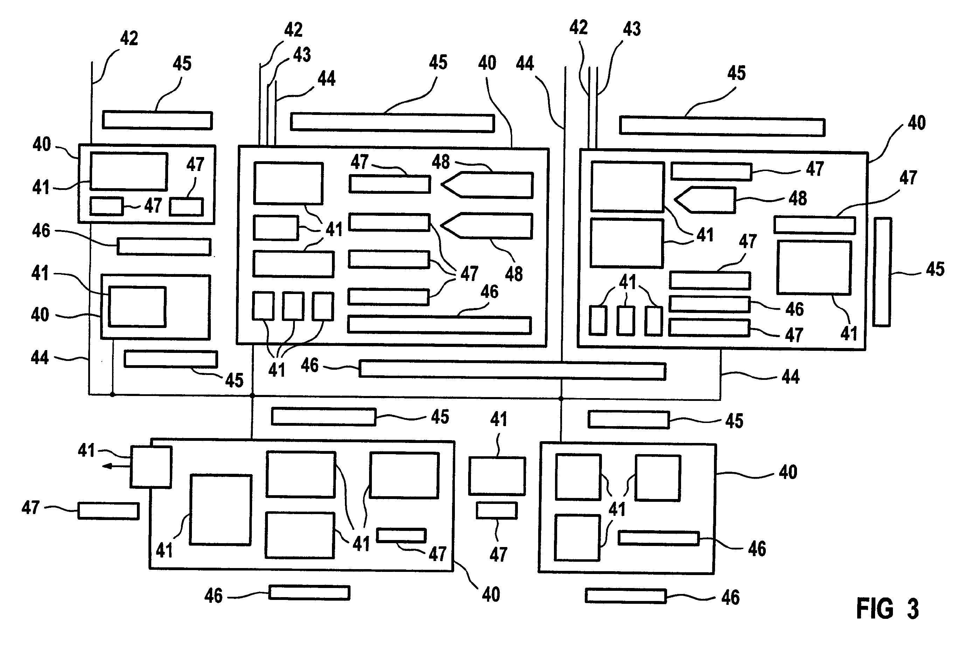

FIG 3 zeigt eine Darstellung von flächigen und linienförmigen Informationseinheiten mit mittlerer Informationsdichte und mäßiger Übersichtlichkeit. Die flächigen ersten Informationseinheiten 2 bis 5 entsprechend FIG 1 sind in FIG 3 als konkrete Ausgestaltungen 40, 41 sowie 45 bis 48 ausgebildet. Die linienförmigen zweiten Informationseinheiten 10 bis 13 entsprechend FIG 1 sind in dieser Ausgestaltung der Erfindung als linienförmige Informationseinheiten 42 bis 44 ausgebildet. Die flächigen Informationseinheiten symbolisieren Produktfamilien 40, Produkte 41 sowie erläuternde Texte 45 bis 48. Die Darstellung von Informationseinheiten entsprechend FIG 3 ist ein Ausführungsbeispiel einer zweiten Ebene zur Darstellung der ersten und zweiten Informationseinheiten mit mittlerer Informationsdichte und mäßiger Übersichtlichkeit. Ein Anwender erhält in der zweiten Ebene des Informationsmodells 1 wesentlich detailliertere Informationen als in der ersten Ebene entsprechend FIG 2. Der grundsätzliche Aufbau der Informationsdarstellung in der zweiten Ebene orientiert sich jedoch am Aufbau der Informationsdarstellung der ersten Ebene. Sowohl die Strukturierung durch flächige und linienförmige Informationseinheiten als auch die Orientierung der einzelnen Informationen zueinander werden beibehalten. Dies ermöglicht einem bereits mit der ersten Ebene vertrauten Anwender eine einfachere Orientierung innerhalb der Informationen der zweiten Ebene des Informationsmodells 1. Zusätzlich zu Hardware-Hinweisen 47 und Bezeichnungen der Produktfamilien 45 werden in dieser Ebene Applikationshinweise 46 und Software-Hinweise 48 dargestellt. Dadurch werden sowohl die Produkte 41 als auch die Produktfamilien 40 genauer beschrieben. Zur Verbindung der Produktfamilien 40 werden linienförmige Informationseinheiten verwendet, welche drei verschiedene Busse bzw. Kommunikationswege 42 bis 44 symbolisieren. Die tatsächlich bestehenden Verbindungen zwischen den Produkten 41 der Produktfamilien 40 werden also als strukturierende Einheiten innerhalb der Darstellung verwendet. Somit werden gleichzeitig Informationen über mögliche Bus- bzw. Verbindungssysteme wiedergegeben und funktionale Beziehungen zwischen den Produktfamilien dargestellt. Die erläuternden Texte 45 bis 48 werden in unterschiedlichen Formatierungen (z. B. unterschiedlichen Farben und/oder Schriftarten) dargestellt, abhängig von ihrer jeweiligen Funktion. Hardware-Hinweise 47 geben Produktnamen wieder, Software-Hinweise 48 nennen verwendete Software-Tools. Andersfarbig dargestellte Applikationshinweise 46 nennen mögliche Anwendungsfelder der jeweiligen Produkte 41 bzw. Produktfamilien 40. Die unterschiedliche Bedeutung der verwendeten Farben wird in einer hier nicht dargestellten Legende erläutert.

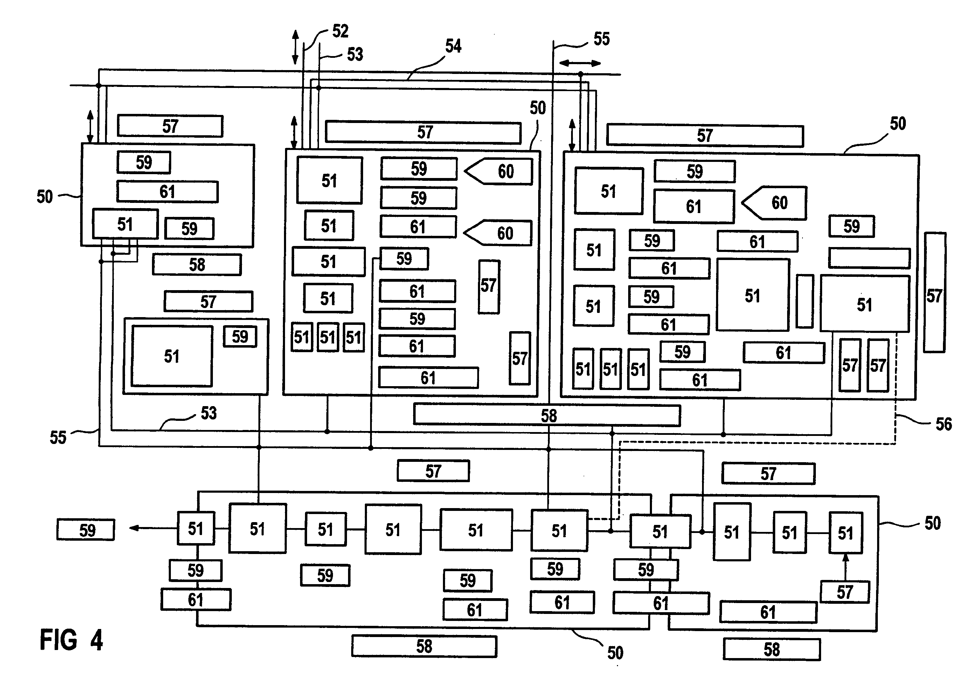

FIG 4 zeigt eine Darstellung von flächigen und linienförmigen Informationseinheiten mit hoher Informationsdichte und geringer Übersichtlichkeit. Teile dieser Darstellung können auf dem Anzeigemittel 20 wiedergegeben werden. Die grundsätzliche Struktur der Informationsdarstellung basiert wiederum auf dem Muster der ersten bzw. zweiten Ebene und dient hier als Ausführungsbeispiel einer dritten Ebene. Auch in der Darstellungsform des Informationsmodells 1 in der dritten Ebene werden Produktfamilien 50 mit Produktfamilienbezeichnungen 57 benannt, Produkte 51 durch Hardware-Hinweise 59 bezeichnet und Produkte 51 sowie Produktfamilien 50 durch linienförmige, verschiedene Busse bzw. Kommunikationswege symbolisierende Informationseinheiten 55 bis 56 verbunden. Entsprechend der Darstellung in den übergeordneten Ebenen werden Applikationshinweise 58 andersfarbig dargestellt. Zusätzlich erhält der Anwender in dieser dritten Ebene Hinweise 61 auf Dokumentationstitel, welche auch als direkt anwählbare Verknüpfung, z. B. in Form eines Hyperlinks, anwählbar sein können. Die diesen Dokumentationstiteln zugeordneten Dokumentationen, z. B. zu den Produkten existierende Handbuchtitel, können in einer weiteren hier nicht dargestellten Ebene mit einer zugehörigen Produktkennziffer und Ausgabedatum dargestellt werden.

Zusammenfassend betrifft die Erfindung somit ein System zur Bereitstellung von Informationen in Form eines Informationsmodells 1, welches die Navigation in komplexen Informationssystemen vereinfacht. Das Informationsmodell des vorgeschlagenen Systems weist flächige erste Informationseinheiten 2...5 und linienförmige zweite Informationseinheiten 10...13 zur Verknüpfung der ersten Informationseinheiten 2...5 auf. Das System weist mindestens ein Anzeigemittel 20 zur Darstellung von Teilen 21, 22 des Informationsmodells 1 und Navigationsmittel 23, 24 zur Änderung einer Informationsdichte der Darstellung der Teile 21, 22 des Informationsmodells 1 auf.

## Patentansprüche

1. System zur Bereitstellung von Informationen in Form eines Informationsmodells (1), wobei das Informationsmodell flächige erste Informationseinheiten (2...5) und linienförmige zweite Informationseinheiten (10...13) zur Verknüpfung der ersten Informationseinheiten (2...5) aufweist, mit mindestens einem Anzeigemittel (20) zur Darstellung von Teilen (21, 22) des Informationsmodells (1) und mit Navigationsmitteln (23, 24) zur Änderung einer Informationsdichte der Darstellung der Teile (21, 22) des Informationsmodells (1).

2. System nach Anspruch 1,
**dadurch gekennzeichnet,**
**dass** das Anzeigemittel (20) zur gleichzeitigen Darstellung von Teilen (21, 22) des Informationsmodells (1) mit unterschiedlicher Informationsdichte vorgesehen ist.

3. System nach Anspruch 1 oder 2,
**dadurch gekennzeichnet,**
**dass** die ersten Informationseinheiten (2...5) Produkte und/oder Produktfamilien repräsentieren und die zweiten Informationseinheiten (10...13) Kommunikationswege und/oder Bussysteme repräsentieren.

4. System nach einem der vorhergehenden Ansprüche,
**dadurch gekennzeichnet,**
**dass** eine erste Ebene zur Darstellung der ersten und zweiten Informationseinheiten (2...5, 10...13) mit geringer Informationsdichte und hoher Übersichtlichkeit, eine zweite Ebene zur Darstellung der ersten und zweiten Informationseinheiten (2...5, 10...13) mit mittlerer Informationsdichte und mäßiger Übersichtlichkeit und eine dritte Ebene zur Darstellung der ersten und zweiten Informationseinheiten (2...5, 10...13) mit hoher Informationsdichte und geringer Übersichtlichkeit vorgesehen ist.

5. System nach einem der vorhergehenden Ansprüche,
**dadurch gekennzeichnet,**
**dass** die ersten Informationseinheiten (2...5) Dokumentationen zu Produkten enthalten.
